# EUROPEAN PATENT APPLICATION

(11) **EP 4 826 374 A1**
(43) Date of publication of application: **21.10.2026**
(21) Application number: 25171061.2
(22) Date of filing: 16.04.2025
(51) Int. Cl.: G01N 29/036, G01N 9/00, G01N 29/34, G01N 29/44

(54) **MEASUREMENT METHOD FOR DETERMINING AT LEAST TWO PHYSICAL PROPERTIES OF A FLUID OF A PIPE-FLUID SYSTEM**

(71) Applicant: ABB SCHWEIZ AG, 5400 Baden (CH)
(72) Inventor: MIGUNOV, Vadim, 68526 Ladenburg (DE); GEBHARDT, Joerg, 55130 Mainz (DE); SZASZ, Paul, 68723 Plankstadt (DE)
(74) Representative: Maiwald GmbH

(57) **Abstract**

The present invention relates to a measurement method (100) for determining at least two physical properties of a fluid (1) of a pipe-fluid system (150) comprising a first property (1a) and at least a second property (1b) of the fluid (1) by using a measurement system (200), wherein the measurement system (200) comprising a vibration sensing device (210) that is configured to measure a vibration of the pipe-fluid system (150), and a processing device (220), wherein the method (100) comprising the steps of:
- measuring (102), by the vibration sensing device (210), a frequency spectrum (10);
- extracting (104), by the processing device (220), from the measured frequency spectrum (10) a first vibration frequency mode (12a) and at least a second vibration frequency mode (12b);
- obtaining (106), by the processing device (220), a dependency (14) of at least two physical properties of the fluid (1) on at least two vibration frequency modes (12a, 12b) that comprises of at least one of the following: a sensitivity factor per vibration frequency modes per physical property (1a, 1b) and a first initial vibration frequency mode value (12c) and at least a second initial frequency mode value (12d);
- calculating (108), by the processing device (220), based on the extracted first and at least second vibration frequency modes (12a, 12b) and the obtained dependency (14) the first property (1a) and at least the second property (1b) of the fluid (1) of the pipe-fluid system (150).

## Description

### FIELD OF THE INVENTION

The present invention relates to measurement method for determining at least two physical properties of a fluid of a pipe-fluid system.

### BACKGROUND OF THE INVENTION

Clamp-on measurement of physical properties of a fluid, e.g. pressure, density, viscosity, flow rate, in a pipe is possible by measuring selected vibration frequency modes of the filled pipe.

In order to measure the change of the physical property of the fluid, the change of the frequency of a selected circumferential vibration mode of the pipe-fluid system is measured. For this, a setup of a measurement system with confining clamps or clamping elements, an excitation system and a vibration measurement are used. The EP4036552 A1 shows an example of such a measurement system.

However, vibration-based measurements of physical properties of a fluid in a pipe suffer from cross-talk, if several different properties change at the same time, which is the case in many industrial processes. It leads to different influence on the vibration frequency which is used to extract the property information. Therefore, all the properties of the fluid except the measured one must be fixed in order to derive the correct value for the measured property from the vibration measurement.

As a consequence, in the case when several properties change at the same time, the frequency change does not deliver a reliable information regarding the fluid property measurement. Compensation of such cross-talk is so far only possible by having an external mostly invasive measurement of the "disturbing" property and subtracting its effect on the frequency from the measured signal. This, however, is often not possible due to the lack of an according sensor at the measurement site.

Therefore, the challenge is to find a compensation method without having to measure the disturbing physical property of the fluid.

Hence, a compensation method for fluctuations of a physical property of a fluid is needed, if the other physical property of the fluid is to be measured, without adding or using an external sensor.

There is a need to address these issues.

### SUMMARY OF THE INVENTION

Therefore, it would be advantageous to provide an improved concept for an efficient and accurate measurement of at least two physical properties of a fluid in a pipe-fluid system.

The object of the present invention is solved by the subject matter of the independent claims, wherein further embodiments are incorporated in the dependent claims.

In a first aspect of the present invention, there is provided a measurement method for determining at least two physical properties of a fluid of a pipe-fluid system comprising a first property and at least a second property of the fluid by using a measurement system, wherein the measurement system comprising a vibration sensing device that is configured to measure a vibration of the pipe-fluid system, and a processing device, wherein the method comprising the steps of:
- measuring, by the vibration sensing device, a frequency spectrum;
- extracting, by the processing device, from the measured frequency spectrum a first vibration frequency mode and at least a second vibration frequency mode;
- obtaining, by the processing device, a dependency of at least two physical properties of the fluid on at least two vibration frequency modes that comprises of at least one of the following: a sensitivity factor per vibration frequency modes per physical property and a first initial vibration frequency mode value and at least a second initial frequency mode value;
- calculating, by the processing device, based on the extracted first and at least second vibration frequency modes and the obtained dependency the first property and at least the second property of the fluid of the pipe-fluid system.

In other words, an important aspect of the present invention in a general manner is that the effect of varying a first property of the fluid, e.g. a pressure of the fluid, on the vibration-based clamp-on density measurement principle is compensated by evaluating at least two different circumferential vibration modes, having different sensitivities to the at least two physical properties of the fluid, e.g. density and pressure, as well as different frequencies. The double evaluation generates a set of independent linear equations, from which both physical properties of the fluid, e.g. density and pressure, are calculated, without the need for additional sensors. It should be noted therein, that the present invention is, however, not limited to two physical properties and thus, more than two physical properties of the fluid can be determined on basis of the principle of the present invention.

In order to implement the method of the present invention, a clamp-on measurement system is used that comprises of constraining clamps or confining claims, an excitation system, a vibration sensing device and a computational unit or a processing device, wherein the processing device is used to extract the frequency value of two different circumferential modes in parallel from the vibration frequency spectrum that is used to determine simultaneously the at least two physical properties of the fluid in a pipe of the pipe-fluid system, e.g. density, pressure, flow parameter such as flow rate, viscosity.

The fluid may be a liquid or a gas.

According to an example, the property of the fluid is at least two of the following properties: density, pressure, viscosity, flow parameter of the fluid. In this way, the present invention provides a flexibility to measure multiple physical properties of a fluid in an efficient manner.

According to an example, the measurement system comprising an excitation system configured to excite the pipe-fluid system and to induce a vibration of the measurement system. In this way, the method of the present invention is implemented in an efficient and component-saving system.

According to an example, the extracted vibration frequency modes are configured to be of at least two vibration frequency modes in a circumferential direction of the pipe-fluid-system. In this way, an efficient and accurate way to determine at least two physical properties of the fluid is provided.

According to an example, in the step of determining, the dependency of the at least two physical properties of the fluid on at least two vibration frequency modes comprises of a first initial physical property value and at least a second initial physical property value. In this way, an efficient and accurate way to determine at least two physical properties of the fluid is provided.

According to an example, a step of calibrating the measurement system is performed by applying an actual frequency of the at least first vibration frequency modes to the first physical initial value of the first physical property of the fluid and to the second physical initial value of the second property of the fluid. In this way, an efficient and accurate way to determine at least two physical properties of the fluid is provided.

According to an example, the step of obtaining is a result of at least one simulation and/or at least one calibration.. In this way, an efficient and accurate way to determine at least two physical properties of the fluid is provided.

According to an example, the first physical property of the fluid corresponds to a density of the fluid, the second physical property of the fluid corresponds to a pressure of the fluid and a third physical property of the fluid corresponds to a viscosity of the fluid. In this way, a flexible, efficient and accurate way to determine at least two physical properties of the fluid is provided.

In a second aspect of the present invention, there is provided a data processing device comprising means for carrying out the method of any one of the examples mentioned before.

In a third aspect of the present invention, there is provided a computer program comprising instructions which, when the program is executed by a computer, cause the computer to carry out the steps of the method of any one of the previous examples.

In a fourth aspect of the present invention, there is provided a computer-readable medium comprising instructions which, when executed by a computer, cause the computer to carry out the method according to any one of the previous examples.

In a fifth aspect of the present invention, there is provided a measurement system configured to perform the method for determining at least two physical properties of a fluid of a pipe-fluid system according to any one of the previous examples, comprising a vibration sensing device that is configured to measure a vibration of the pipe-fluid system, and an excitation system configured to excite the pipe-fluid system and to induce a vibration of the measurement system, and a processing device.

In a sixth aspect of the present invention, there is provided a pipe-fluid system comprising a pipe, a clamping element, and the measurement system according to the fifth aspect.

### BRIEF DESCRIPTION OF THE DRAWINGS

Exemplary embodiments will be described in the following with reference to the following drawings:
Fig. 1 illustrates a schematic flow of a measurement method for determining at least two physical properties of a fluid of a pipe-fluid system according to an embodiment of the present invention;
Fig. 2 illustrates a schematic configuration of a measurement system to implement the method according to an embodiment of the present invention;
Fig. 3a, 3b illustrate schematic examples of different vibration frequency modes and mode shape definitions an embodiment of the present invention; and
Fig. 4a, 4b, 4c illustrate schematic examples of vibrations of a pipe of a pipe-fluid system according to an embodiment of the present invention.

### DETAILED DESCRIPTION OF THE DRAWINGS

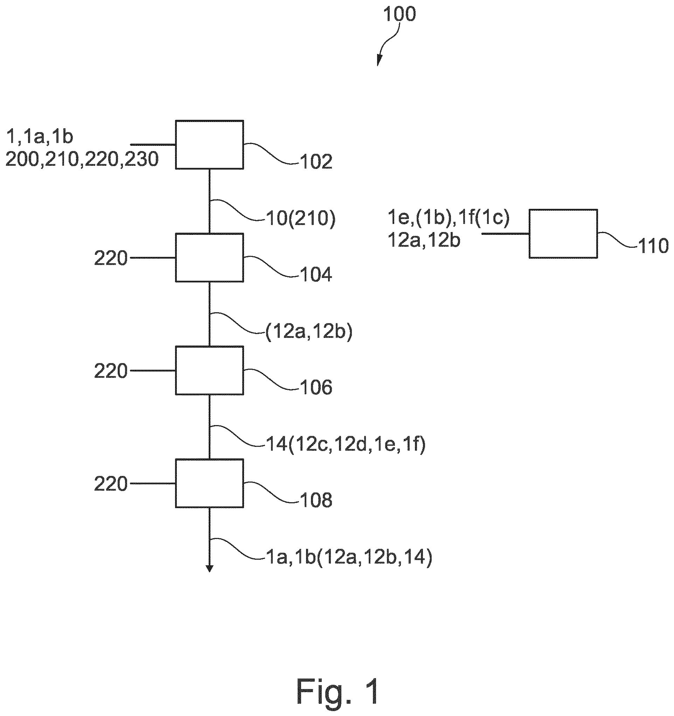

Fig. 1 illustrates a schematic flow of a measurement method for determining at least two physical properties of a fluid of a pipe-fluid system according to an embodiment of the present invention.

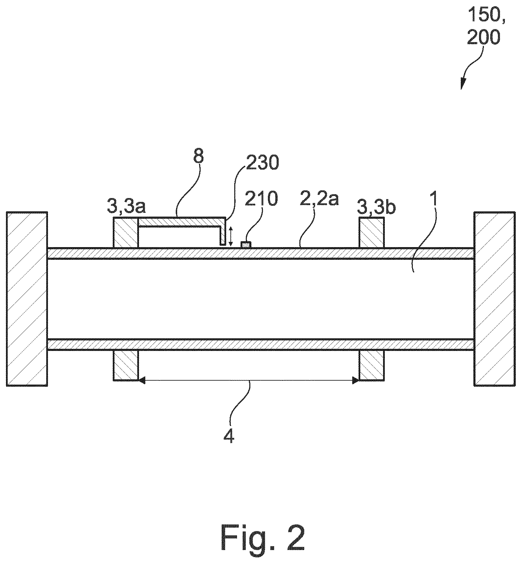

The measurement method 100 for determining at least two physical properties of a fluid 1 of a pipe-fluid system 150 comprising a first property 1a and at least a second property 1b of the fluid 1 by using a measurement system 200 as shown in Fig. 2 comprising the following steps:
In a first step 102, measuring, by the vibration sensing device 210, of a frequency spectrum 10 is performed.
In a second step 104, extracting, by the processing device 220, from the measured frequency spectrum 10 a first vibration frequency mode 12a and at least a second vibration frequency mode 12b is performed.
In a third step 106, obtaining, by the processing device 220, a dependency 14 of at least two physical properties of the fluid 1 on at least two vibration frequency modes 12a, 12b is performed that comprises of at least one of the following: a sensitivity factor per vibration frequency modes per physical property 1a, 1b and a first initial vibration frequency mode value 12c and at least a second initial frequency mode value 12d.

Optionally, the step 106 of obtaining, the dependency 14 of the at least two physical properties 1a, 1b of the fluid 1 on at least two vibration frequency modes 12a, 12b comprises of a first initial physical property value 1e and at least a second initial physical property value 1f.

Optionally, the step 106 of obtaining is a result of at least one simulation and/or at least one calibration.

In a fourth step 108, calculating, by the processing device 220, is performed based on the extracted first and at least second vibration frequency modes 12a, 12b and the obtained dependency 14 the first property 1a and at least the second property 1b of the fluid 1 of the pipe-fluid system 150.

The measurement system 200 as shown in a possible configuration of Fig. 2 to implement the method 100 comprises of the vibration sensing device 210 that is configured to measure a vibration of the pipe-fluid system 150, and the processing device 220. Optionally, the measurement system 200 further comprises an excitation system 230 configured to excite the pipe-fluid system 150 and to induce a vibration of the measurement system 150.

As can be further seen in Fig. 2, the measurement system 200 further comprising a clamping element 3 that is arranged around the pipe-fluid system 150 and that comprises a first clamping element 3a and second clamping element 3b, wherein the first clamping element 3a and the second clamping element 3b form a measurement section 4 that corresponds to a pipe segment 2a of the pipe 2 of the pipe-fluid system 150.

Further, the measurement system 200 comprises an excitation system 230 that is configured to excite the pipe-fluid system 150 and to induce a vibration of the measurement system 200. The excitation system 230 that may include a cantilever 8 to fasten the excitation system 230 may be arranged at a first excitation position and around a circumference of the pipe 2 within the measurement section 4 of the pipe segment 2a of the pipe 2. The excitation system 230 may also be part of a cantilever 8 that is installed at the clamping element 3.

Further, the measurement system 200 comprises a vibration sensing device 210 that is configured to measure the induced vibration. The vibration sensing device 210 may be an accelerometer. In a further example, the vibration sensing device 210 may be a microphone or another type of sensor. As can be seen in an example in Fig. 2, the vibration sensing element or sensing device 210 may be arranged at a measurement position within the measurement section 4 of the pipe segment 2a of the pipe 2.

The pipe-fluid system 150 may comprise of a pipe 2. The pipe 2 contains the fluid 1.

In a further embodiment of the present invention, a measurement system 200 is provided that is configured to perform the method for determining at least two physical properties of a fluid 1 of a pipe-fluid system 150 according to any one of the embodiments, comprising:
- a vibration sensing device 210 that is configured to measure a vibration of the pipe-fluid system 150, and an excitation system 230 configured to excite the pipe-fluid system 150 and to induce a vibration of the measurement system 150, and
- a processing device 220.

In a further embodiment of the present invention, the pipe-fluid system 150 comprising the pipe 2, the clamping element 3 and said measurement system 200.

Optionally, the property of the fluid 1 is at least two of the following properties: density, pressure, viscosity, flow parameter, e.g. a flow rate, of the fluid 1.

Optionally, the extracted vibration frequency modes 12a, 12b are configured to be of at least two vibration frequency modes in a circumferential direction of the pipe-fluid-system 150.

Optionally, a step of calibrating 110 the measurement system 200 is performed by applying an actual frequency of the at least first vibration frequency modes 12a, 12b to the first physical initial value 1e of the first physical property 1a of the fluid 1 and to the second physical initial value 1f of the second property 1b of the fluid 1. The step of calibrating may be performed before the step of obtaining 106.

Optionally, the first physical property 1a of the fluid 1 corresponds to a density of the fluid 1, the second physical property 1b of the fluid 1 corresponds to a pressure of the fluid 1 and a third physical property 1g of the fluid 1 corresponds to a viscosity of the fluid 1.

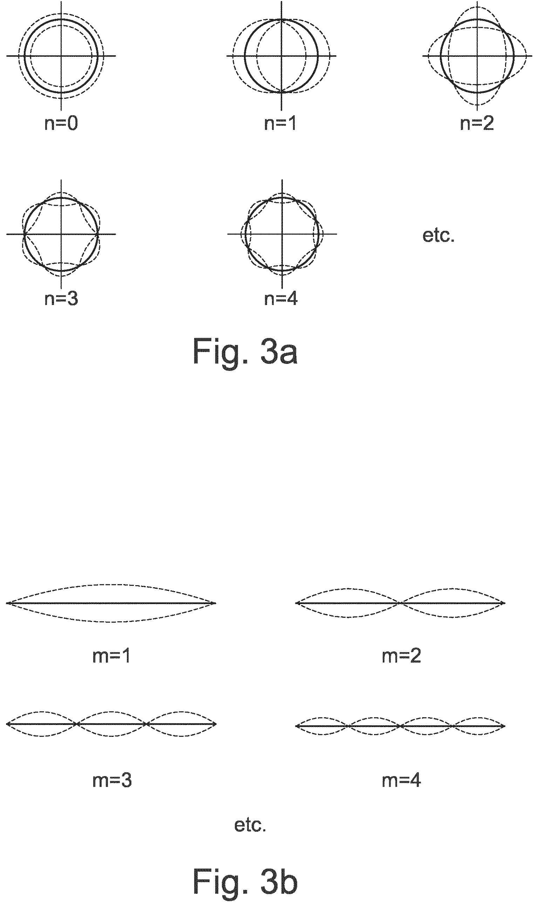

Fig. 3a, 3b illustrate schematic examples of different (circumferential) vibration frequency modes and mode shape definitions an embodiment of the present invention. The number n represents the number of circumferential noddes divided by the factor 2. The number m represents the number of longitudinal nodes minus 1. The cross-section of the pipe may vary in these examples.

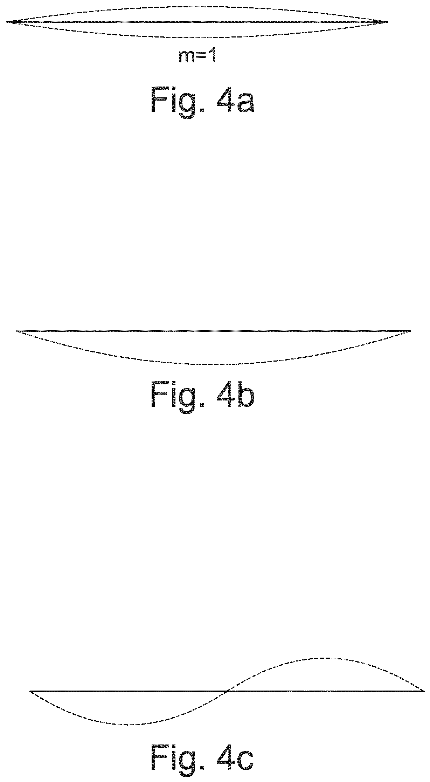

Fig. 4a, 4b, 4c illustrate schematic examples of vibrations of a (flanged) pipe of a pipe-fluid system according to an embodiment of the present invention. The cross-section of the pipe does not change in these examples.

In the following, a detailed example is provided how to implement the method of the present invention to determine at least two physical properties of the fluid of a pipe-fluid system 150 according to an embodiment of the present invention.

The dependency, i.e. sensitivity of the frequency of the pipe-fluid system 150 according to Fig. 1 and Fig. 2 to the change of physical properties of the fluid, i.e. the change of frequency in Hz for a given change of pressure or density, can be predicted using analytic or FEM calculations.

These show that for different circumferential vibration modes (see Fig. 3a to 3c) the sensitivity changes noticeably both for pressure and for density. However, this change is very different between the two physical properties. The sensitivity to density is increasing with higher modes, i.e. more vibration nodes over the circumference, nearly linearly, while the pressure sensitivity is relatively stable over several modes.

The change in frequency due to the variation of both pressure and density can be described as $Δ f = {s}_{ρ} \times Δ ρ + {s}_{p} \times Δ p$ with $Δ f = f - {f}_{0}$ $Δ ρ = ρ - {ρ}_{0}$ $Δ p = p - {p}_{0}$

Herein, the values of *sₚ* and *sₚ* are the sensitivities of pressure p and density r, i.e. the change in frequency for a given change in pressure or density alone.

The states with the index 0 are defined as a reference or initial state, which is typically a calibration value, with regard to which the changes are measured.

The above formula demands for the knowledge of either pressure or density to quantify the other fluid property.

The invention consists in measuring and evaluating the frequency changes of at least two different vibration modes with different n-numbers (number of circumferential vibration nodes, e.g. n and n+1 or n+2) compared to an initial calibration state. For both modes the sensitivity to pressure (*sₚ*) and to density (*s_{ρ}*) is known.

While the sensitivity to pressure varies only little with mode number, the sensitivity to density has high variance with the selected mode. Consequently, a set of linear equations can be set up, with two unknowns, allowing to determine both pressure and density: $Δ {f}_{1} = {s}_{ρ _ 1} \times Δ ρ + {s}_{p _ 1} \times Δ p$ $Δ {f}_{2} = {s}_{ρ _ 2} \times Δ ρ + {s}_{p _ 2} \times Δ p$

The indices 1 and 2 refer to the selected vibration modes e.g. n and n+1 or n+2. The set of equations can also be expressed with the following formula: $\left(\begin{matrix}Δ {f}_{1} \\ Δ {f}_{2}\end{matrix}\right) = \left[\begin{matrix}{s}_{ρ _ 1} & {s}_{p _ 1} \\ {s}_{ρ _ 2} & {s}_{p _ 2}\end{matrix}\right] \times \left(\begin{matrix}Δ ρ \\ Δ p\end{matrix}\right)$

With Δρ and Δp being the two values to measure.

Solving the equation set results in an output of both density and pressure change relative to an initial calibration state.

Which set of modes is used can depend on the actual circumstances, preferably modes with high signal level shall be selected for high resolution of the measurement.

This set of equations can also be extended in case of further dependencies in special applications, e.g. including viscosity *η* as further property. Accordingly, the correlation can then be extended to a 3-fold matrix: $\left[\begin{matrix}{a}_{11} & {a}_{12} & {a}_{13} \\ {a}_{21} & {a}_{22} & {a}_{23} \\ {a}_{31} & {a}_{32} & {a}_{33}\end{matrix}\right] \left(\begin{matrix}Δ ρ \\ Δ p \\ Δ η\end{matrix}\right) = \left(\begin{matrix}Δ {f}_{1} \\ Δ {f}_{2} \\ Δ {f}_{3}\end{matrix}\right)$

Regarding the measurement system, this requires the parallel or consecutive evaluation of the vibration signal, extracting the frequencies of the desired modes at each measurement point.

### Reference signs

- 1: Fluid
- 1a: First physical property
- 1b: Second physical property
- 1g: Third physical property
- 1e: First initial physical property value
- 1f: Second initial physical property value
- 2: Pipe
- 2a: Pipe segment
- 3: Clamping element / Confinement element
- 3a: First clamping element
- 3b: Second clamping element
- 4: Measurement section
- 8: Cantilever
- 10: Frequency spectrum
- 12a: First vibration frequency mode
- 12b: Second vibration frequency mode
- 12c: First initial vibration frequency mode
- 12d: Second initial vibration frequency mode
- 14: Dependency (parameter)

- 100: Method
- 102: Measuring
- 104: Extracting
- 106: Obtaining
- 108: Calculating
- 110: Calibrating

- 150: Pipe-fluid system
- 200: Measurement system
- 210: Vibration sensing device
- 220: Processing device
- 230: Excitation system

## Claims

1. A measurement method (100) for determining at least two physical properties of a fluid (1) of a pipe-fluid system (150) comprising a first property (1a) and at least a second property (1b) of the fluid (1) by using a measurement system (200), wherein the measurement system (200) comprising a vibration sensing device (210) that is configured to measure a vibration of the pipe-fluid system (150), and a processing device (220), wherein the method (100) comprising the steps of:
- measuring (102), by the vibration sensing device (210), a frequency spectrum (10);
- extracting (104), by the processing device (220), from the measured frequency spectrum (10) a first vibration frequency mode (12a) and at least a second vibration frequency mode (12b);
- obtaining (106), by the processing device (220), a dependency (14) of at least two physical properties of the fluid (1) on at least two vibration frequency modes (12a, 12b) that comprises of at least one of the following: a sensitivity factor per vibration frequency modes per physical property (1a, 1b) and a first initial vibration frequency mode value (12c) and at least a second initial frequency mode value (12d);
- calculating (108), by the processing device (220), based on the extracted first and at least second vibration frequency modes (12a, 12b) and the obtained dependency (14) the first property (1a) and at least the second property (1b) of the fluid (1) of the pipe-fluid system (150).

2. Measurement method (100) according to claim 1, wherein the property of the fluid (1) is at least two of the following properties: density, pressure, viscosity, flow parameter of the fluid (1).

3. Measurement method (100) according to any of the previous claims, wherein the measurement system (200) comprising an excitation system (230) configured to excite the pipe-fluid system (150) and to induce a vibration of the measurement system (150).

4. Measurement method (100) according to any of the previous claims, wherein the extracted vibration frequency modes (12a, 12b) are configured to be of at least two vibration frequency modes in a circumferential direction of the pipe-fluid-system (150).

5. Measurement method (100) according to any one of the previous claims, wherein in the step (106) of determining, the dependency (14) of the at least two physical properties (1a, 1b) of the fluid (1) on at least two vibration frequency modes (12a, 12b) comprises of a first initial physical property value (1e) and at least a second initial physical property value (1f).

6. Measurement method (100) according to claim 5, wherein a step of calibrating (110) the measurement system (200) is performed by applying an actual frequency of the at least first vibration frequency modes (12a, 12b) to the first physical initial value (1e) of the first physical property (1a) of the fluid (1) and to the second physical initial value (1f) of the second property (1b) of the fluid (1).

7. Measurement method (100) according to any one of the previous claims, wherein the step of obtaining (106) is a result of at least one simulation and/or at least one calibration.

8. Measurement method (100) according to any one of the previous claims, wherein the first physical property (1a) of the fluid (1) corresponds to a density of the fluid (1), the second physical property (1b) of the fluid (1) corresponds to a pressure of the fluid (1) and a third physical property (1g) of the fluid (1) corresponds to a viscosity of the fluid (1).

9. A data processing device comprising means for carrying out the method of any one of the claims 1 to 8.

10. A computer program comprising instructions which, when the program is executed by a computer, cause the computer to carry out the steps of the method of any one of the claims 1 to 8.

11. A computer-readable medium comprising instructions which, when executed by a computer, cause the computer to carry out the method according to any one of the claims 1 to 8.

12. A measurement system (200) configured to perform the method for determining at least two physical properties of a fluid (1) of a pipe-fluid system (150) according to any one of the previous claims 1 to 8, comprising:
- a vibration sensing device (210) that is configured to measure a vibration of the pipe-fluid system (150), and an excitation system (230) configured to excite the pipe-fluid system (150) and to induce a vibration of the measurement system (150), and
- a processing device (220).

13. Pipe-fluid system (150) comprising a pipe (2), a clamping element (3), and the measurement system (200) according to claim 12.
